**Europäisches Patentamt**

**European Patent Office**

**Office européen des brevets**

(19)

(11) Numéro de publication: **0 067 097**
**B1**

## (12) FASCICULE DE BREVET EUROPEEN

(45) Date de publication du fascicule du brevet:
31.10.84

(51) Int. Cl.³: **B 64 C 27/46**

(21) Numéro de dépôt: **82400927.8**

(22) Date de dépôt: **19.05.82**

(54) **Extrémité de pale pour voilure tournante d'aéronef.**

(30) Priorité: **05.06.81 FR 8111232**

(43) Date de publication de la demande:
**15.12.82 Bulletin 82/50**

(45) Mention de la délivrance du brevet:
**31.10.84 Bulletin 84/44**

(84) Etats contractants désignés:
**DE GB IT**

(56) Documents cités:
**FR - A - 2 007 973**
**FR - A - 2 153 252**
**FR - A - 2 256 868**
**FR - A - 2 311 713**
**FR - A - 2 397 328**
**FR - A - 2 408 518**
**US - A - 3 399 731**
**US - A - 4 248 572**

(73) Titulaire: **Office National d'Etudes et de Recherches Aerospatiales (O.N.E.R.A.), 29 Avenue de la Division Leclerc, F-92320 Chatillon sous Bagneux (FR)**
Titulaire: **Société Nationale Industrielle Aérospatiale Société anonyme dite:, 37 Bld de Montmorency, F-75016 Paris (FR)**

(72) Inventeur: **Philippe, Jean-Jaques, 31 rue Pierre Curie, F-78000 Versailles (FR)**
Inventeur: **Lyothier, Robert Marius Claude, Cité CEA Bloc 1, F-13140 Miramas (FR)**

(74) Mandataire: **Bonnetat, Christian, Cabinet PROPI Conseils 23 rue de Léningrad, F-75008 Paris (FR)**

## Description

La présente invention concerne une extrémité de pale pour voilure tournante d'aéronef et plus particulièrement une extrémité de pale dont l'envergure est comprise entre 5 et 15% de l'envergure de ladite pale et telle que son bord d'attaque et son bord de fuite prolongent en flèche vers l'arrière respectivement le bord d'attaque et le bord de fuite de ladite pale, alors que la corde la plus grande de ladite extrémité de pale est au plus égale à la corde du profil de la pale adjacent à ladite extrémité de pale et que le point extrême du bord d'attaque de ladite extrémité de pale se trouve vers l'arrière au-delà de la ligne d'envergure de la pale disposée en position médiane entre le bord d'attaque et le bord de fuite de celle-ci.

On sait que, aussi bien en vol stationnaire qu'en vol d'avancement, l'extrémité des pales d'un rotor d'aéronef à voilure tournante, notamment un hélicoptère, a une influence importante sur le fonctionnement aérodynamique du rotor. En effet, l'extrémité des pales constitue la zone dans laquelle apparaissent les plus grandes pressions dynamiques et des tourbillons marginaux, générateurs de pertes de puissance et de bruit.

L'amélioration des extrémités de pales peut se traduire par une amélioration notable des performances de l'aéronef. C'est pour cela que de nombreuses études ont été effectuées à ce sujet.

Par exemple, l'auteur du brevet français N° 2 256 868 propose de réaliser une extrémité de pale dont le bord d'attaque courbe rejoint le bord d'attaque de la pale au bord de fuite de celle-ci. Dans ce mode de réalisation, au voisinage de l'exrémité de pale, le bord de fuite de la pale reste parallèle au bord d'attaque de celle-ci et est plus long vers l'extérieur, ladite extrémité de pale étant reliée à la pale le long d'un plan oblique par rapport à l'envergure de la pale. Ainsi, l'extrémité n'occupe pas de position en flèche arrière par rapport à la pale.

En revanche, dans le brevet français N° 2 311 713, on décrit une extrémité de pale plus large que la partie correspondante de la pale à laquelle elle est reliée, et comportant notamment une saillie vers l'extérieur du bord d'attaque. Dans ce mode de réalisation, le bord d'attaque et le bord de fuite de l'extrémité de pale sont curvilignes et présentent une légère forme en flèche vers l'arrière. De plus, le point extrême du bord d'attaque de cette extrémité de pale se trouve, en profondeur, au voisinage du bord d'attaque de la pale.

Les extrémités de pale décrites dans les brevets français 2 153 252, 2 397 328 et 2 408 518 comportent des bords d'attaque et de fuite parallèles et rectilignes en flèche, de sorte que ces extrémités présentent la forme d'un parallélogramme. Enfin, le brevet américain N° 4 248 572 décrit une extrémité de pale dans laquelle le bord d'attaque et le bord de fuite rectilignes sont disposés en flèche vers l'arrière, le bord d'attaque étant plus incliné que le bord de fuite, de sorte que cette extrémité présente une forme effilée. Dans ce mode de réalisation, le point extrême du bord d'attaque se trouve vers l'arrière, au-delà de la ligne médiane entre le bord d'attaque et le bord de fuite de la pale.

La présente invention a pour objet une extrémité de pale permettant de diminuer notablement l'intensité ou d'empêcher la formation des chocs qui apparaissent sur une pale avançante où l'addition des vitesses de rotation des pales et d'avancement de l'aéronef est telle que des zones d'écoulement supersonique y apparaissent. L'intensité des chocs est proportionnelle aux vitesses maximales atteintes sur l'extrémité de la pale, et c'est donc en diminuant ces survitesses qu'il est possible de contrôler les chocs. L'objet essentiel de la présente invention est donc de diminuer de façon importante ces survitesses sur les extrémités des pales, grâce à une forme en plan judicieuse de ces exrémités.

Par rapport au US-A-4 248 572 qui décrit déja une extrémité de pale pour voilure tournante d'aéronef dont l'envergure est comprise entre 5 et 15% de l'envergure de ladite pale et telle que, en plan, son bord d'attaque et son bord de fuite prolongent en flèche vers l'arrière respectivement le bord d'attaque et le bord de fuite de ladite pale, alors que la corde la plus grande de ladite extrémité de pale est au plus égale à la corde du profil de la pale adjacent à ladite extrémité de pale et que le point extrême du bord d'attaque de ladite extrémité de pale se trouve vers l'arrière au-delà de la ligne d'envergure de la pale disposée en position médiane etre le bord d'attaque et le bord de fuite de ladite pale, ladite extrémité de pale s'effilant vers l'extérieur, la présente invention est caractérisée en ce que le point commun à la ligne de bord d'attaque de la pale et à la ligne du bord d'attaque de l'extrémité de pale est moins éloigné de l'axe de la voilure tournante que le point cmmun à la ligne de bord de fuite de la pale et à la ligne de bord de fuite de l'extrémité de pale, de sorte qu'entre lesdits poins existe un décalage qui, mesuré parallèlement à l'envergure de la pale, est compris entre 5 et 25% de la corde du profil de la pale adjacent à ladite extrémité de pale, et en ce que la ligne de bord d'attaque de ladite extrémité de pale, est curviligne et telle que son angle de flèche varie progressivement et de façon continue depuis une faible valeur du côté de la pale comprise entre 0 et 30°, jusqu'à une valeur élevée vers l'extérieur de la pale comprise entre 60 et 90°.

On a en effet trouvé que la combinaison des quatre particularités suivantes:

a) un décalage vers l'extérieur de la flèche du bord de fuite par rapport à la flèche du bord d'attaque;

b) une évolution progressive vers l'arrière de la ligne de bord d'attaque suivant une loi mathématique qui entraîne une variation de l'angle de flèche géométrique local jusqu'à des valeurs élevées et amène le bord d'attaque de la dernière section de l'extrémité nettement en arrière de celui de la première section de l'extrémité;

c) une ligne de bord de fuite mise également en flèche vers l'arrière et telle que les cordes locales soient voisines ou inférieures à celle de la première section de l'extrémité;

d) une évolution des cordes locales des différents profils de cette extrémité amenant la corde du dernier profil (bord extrême) à une valeur nettement inférieure à celle du profil de la première section de l'extrémité;

permettait de diminuer les valeurs des vitesses locales du fluide au contact de l'exrémité de la pale de telle manière que les chocs qui apparaissent sur les extrémités connues au voisinage de l'azimuth 90°, pour des vitesses d'avancement élevées de l'hélicoptère, voient leurs intensités diminuées, cette diminution pouvant aller jusqu'à l'annulation complète.

En particulier, l'augmentation jusqu'à des valeurs élevées de l'angle de flèche de la ligne de bord d'attaque en fonction de la position en envergure permet d'éliminer pratiquement les zones, dans lesquelles le fluide est fortement accéléré et qui existent sur les extrémités dont l'angle de flèche géométrique de la ligne de bord d'attaque est constant au voisinage du bord extrême. Ces zones sont génératrices de chocs au voisinage de la pale avançante (azimuth 90°) et les extrémités selon l'invention constituent une amélioration sur le plan aérodynamique des extrémités en flèche connues, amélioration qui produit une diminution sensible de la puissance à fournir au rotor.

Les extrémités selon l'invention ayant une ligne de bord de fuite en flèche vers l'arrière permettent d'éliminer le risque d'apparition de chocs sur le bord extérieur de l'extrémité, chocs qui existeraient si la ligne de bord de fuite était dans le prolongement de la partie courante de la pale ou si elle créait une variation trop rapide de la loi d'évolution des cordes (loi strictement décroissante) des sections d'extrémités.

Les extrémités selon l'invention en supprimant ou atténuant les ondes de chocs pour les azimuths correspondant aux secteurs de la pale avançante engendrent en conséquence beaucoup moins de bruit, notamment en vol de translation rapide.

De préférence, l'extrémité de pale est telle que, pour sa ligne de bord d'attaque, la variation de l'angle de flèche le long de l'envergure est au moins approximativement linéaire sur au moins la plus grande partie de ladite envergure.

Cette ligne de bord d'attaque peut être telle que la variation de l'angle de flèche le long de l'envergure est au moins approximativement linéaire dans la partie centrale de ladite extrémité, alors qu'à ses deux extrémités la variation de l'angle de flèche est plus rapide que la variation linéaire: d'abord à dérivée monotone décroissante puis ensuite à dérivée monotone croissante, selon la position en envergure.

Par ailleurs, la partie en flèche de la ligne de bord de fuite peut être rectiligne ou sensiblement rectiligne; par exemple pour des impératifs de fabrication, la ligne du bord de fuite peut être constituée de parties rectilignes se raccordant entre elles.

Dans un mode de réalisation avantageux, l'extrémité de pale comporte deux profils d'extrémités parallèles entre eux et orthogonaux à l'envergure de la pale, le profil d'extrémité intérieur servant de raccord à la pale et ayant une corde plus grande que le profil d'extrémité extérieur, qui se trouve décalé vers l'arrière par rapport audit profil d'extrémité intérieur, les extrémités avant des cordes desdits profils étant reliées par une ligne de bord d'attaque, telle que son angle de flèche varie progressivement et de façon continue depuis une faible valeur du côté de la pale jusqu'à une valeur élevée vers l'extérieur de la pale, tandis que les extrémités arrière des cordes desdits profils sont reliées par une partie rectiligne de bord de fuite prolongeant la ligne de bord de fuite de la pale, suivie par une partie rectiligne de bord de fuite en flèche. L'envergure E, la corde c du profil d'extrémité, la distance m du point arrière du profil d'extrémité extérieur à la ligne de bord d'attaque de la pale, la distance l du point avant du profil d'extrémité extérieur à la ligne de bord d'attaque de la pale, et la distance d du point arrière du profil d'extrémité extérieur à la ligne de bord de fuite de la pale peuvent être liées par les relations suivantes:

$$0,3\,C \leq c \leq 0,7\,C \qquad (1)$$
$$0,5\,C \leq E \leq 1,5\,C \qquad (2)$$
avec de préférence,
$$0,7\,C \leq E \leq 1,1\,C \qquad (3)$$
$$0,5\,C \leq l \leq C \qquad (4)$$
$$1,1\,C \leq m \leq 1,5\,C \qquad (5)$$
et
$$0,1\,C \leq d \leq 0,5\,C \qquad (6).$$

Avantageusement, le vrillage de l'extrémité de pale selon l'invention consiste en un précalage de la corde de ses profils successifs, équivalent à une rotation effectuée autour d'un point situé sur la corde du profil considéré à 25%±5% en corde en arrière du bord d'attaque, le lieu des points autour desquels sont effectuées les rotations étant situé dans un plan défini par la corde du pied de pale où le vrillage est nul et l'axe de vrillage de la partie courante de la pale. Ce vrillage peut être linéaire le long de l'envergure de l'exrémité de pale, mais également non linéaire.

Les figures du dessin annexé feront bien comprendre comment l'invention pourra être réalisée.

La figure 1 est une vue en perspective schématique d'une pale de rotor d'hélicoptère pourvue d'une extrémité de pale conforme à la présente invention.

La figure 2 est une vue en plan schématique de l'extrémité de pale selon l'invention.

Les figures 3 et 4 donnent, en fonction de l'envergure E, Deux exemples d'évolution de l'angle de flèche du bord d'attaque de l'extrémité de pale selon l'invention.

Les figures 5, 6 et 7 donnent les résultats d'essais comparatifs entre une pale équipée d'une extrémité selon l'invention et une pale identique à extrémité rectangulaire.

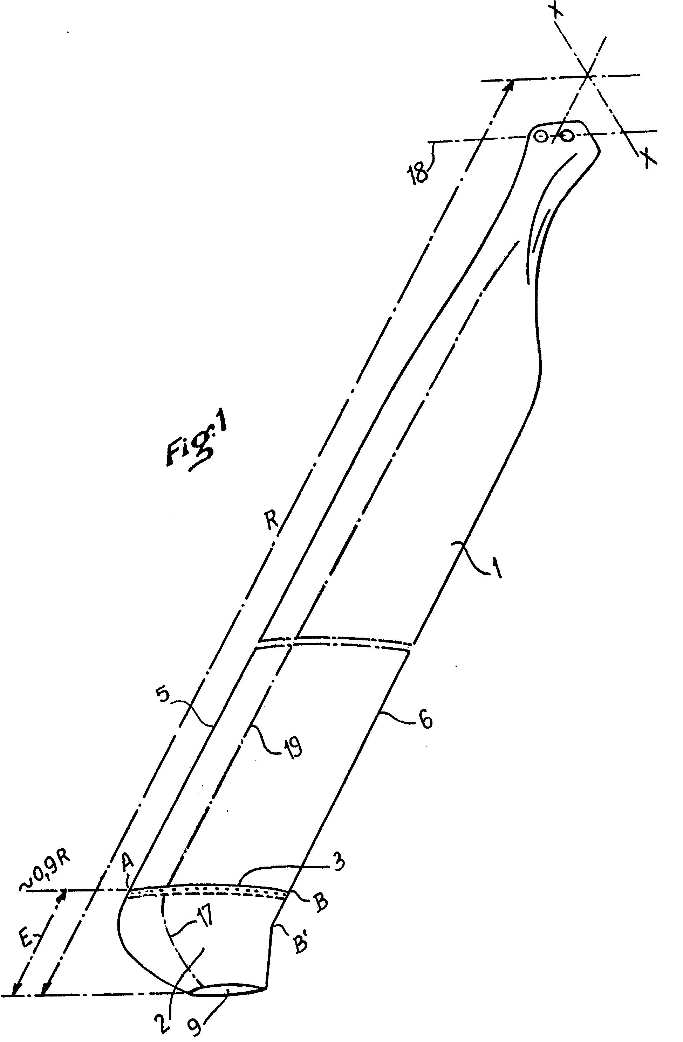

La pale 1 selon l'invention, montrée par la figure 1, fait partie d'un rotor dont le moyeu et les autres pales ne sont pas représentés, ce rotor pouvant tourner autour d'un axe X-X. La pale 1 présente une longueur totale R et, à son extrémité extérieure, elle est pourvue d'une exrémité de pale 2, conforme à l'invention. Par exemple, l'extrémité de pale 2 commence à une distance qui, mesurée à partir de l'axe X-X, est de l'ordre de 0,9 R, l'envergure E de cette extrémité étant alors de l'ordre de 0,1 R.

Dans l'exemple représenté, l'extrémité de pale 2 est raccordée au reste de la pale 1, le long d'une section droite 3 correspondant à un profil dont la corde à une longueur C. Cependant, comme on le verra par la suite, il serait possible de raccorder différemment l'extrémité 3 au reste de la pale, par exemple le long d'une ligne oblique 4 (voir la figure 2).

La pale 1 comporte un bord d'attaque 5 et un bord de fuite 6 définissant, en plan, respectivement une ligne de bord d'attaque 7 et une ligne de bord de fuite 8.

A son extrémité opposée au reste de la pale 1, l'extrémité de pale 2 est délimitée par un profil extrême 9, dont le plan est parallèle à celui du profil 3. Le profil 9 est plus petit que le profil 3 et plus en arrière (c'est-à-dire décalé vers le bord de fuite) que celui-ci. Par exemple, la corde c du profil 9 est comprise entre 30% et 70% de la corde C du profil 3, de sorte que l'on peut écrire:

$$0,3\,C \leq c \leq 0,7\,C \tag{1}.$$

Sur la figure 2, les points de bord d'attaque et de bord de fuite du profil 3 sont respectivement désignés par A et B, tandis que les points correspondant du profil 9 portent les références G et H.

L'envergure E de l'extrémité de pale 2 (c'est-à-dire la distance séparant les profils 3 et 9) est choisie de façon que:

$$0,5\,C \leq E \leq 1,5\,C \tag{2}$$
avec de préférence
$$0,7\,C \leq E \leq 1,1\,C \tag{3}.$$

Par ailleurs, le recul du profil 9 par rapport à la ligne de bord d'attaque 7 (c'est-à-dire la distance l du point G à cette ligne 7) est telle que:

$$0,5\,C \leq l \leq C \tag{4}$$

de sorte que le point G se trouve en arrière de la ligne d'envergure médiane L-L de la pale 1.

Les valeurs de c et de l déterminées par les relations (1) et (4) doivenbt de plus satisfaire aux

relations

$$1,1\,C \leq m \leq 1,5\,C \tag{5},$$
avec $m = l + c$, et
$$0,1\,C \leq d \leq 0,5\,C \tag{6}$$
avec $d = m - C$,

d représentant l'amplitude de la flèche du bord de fuite.

Entre les points A et G, la ligne de bord d'attaque de l'extrémité de pale 2 suit, en plan, un contour 10, tel que l'angle de flèche $\Phi$ du point courant M de ce contour, suive une évolution progressive depuis des valeurs faibles jusqu'à des valeurs élevées.

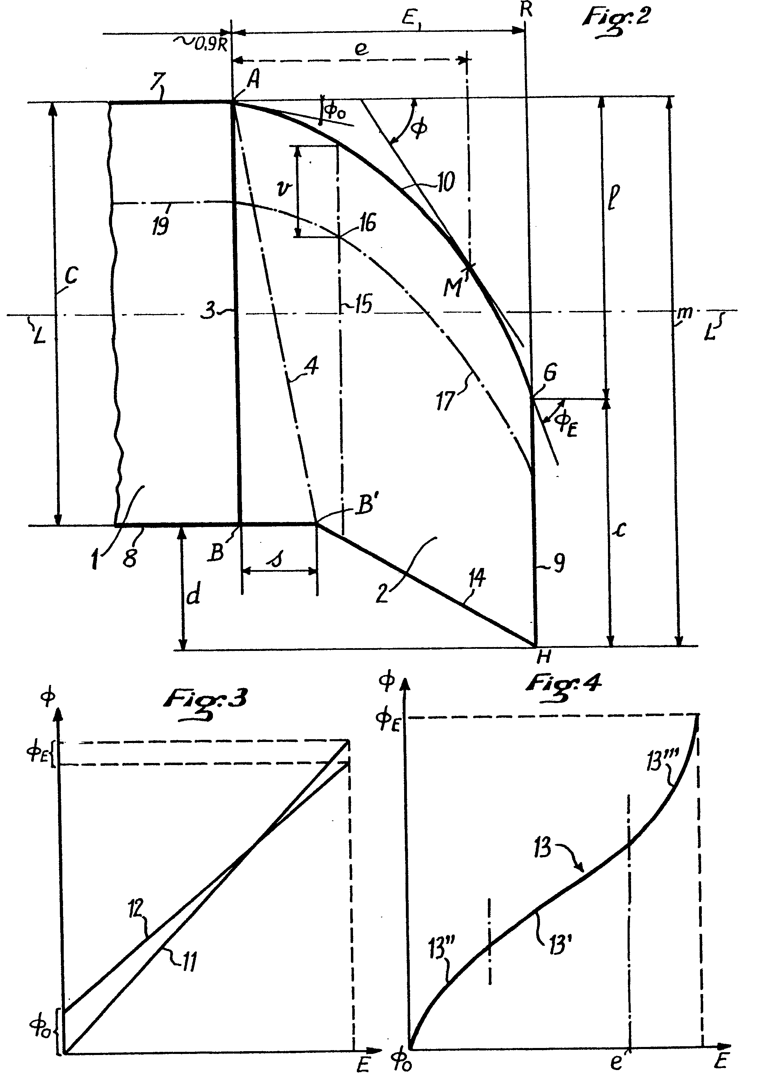

Sur les figures 3 et 4, on a représenté des exemples avantageux de variation de l'angle de flèche $\Phi$ en fonction de la position en envergure e du point courant M, comptée à partir du point A.

Sur le diagramme de la figure 3, la ligne de bord d'attaque 10 est telle que l'angle de flèche $\Phi$ varie linéairement entre deux valeurs $\Phi_0$ et $\Phi_E$, représentant respectivement les angles de flèche géométrique des sections d'extrémité de l'extrémité de pale 2. Il en résulte que la ligne de bord d'attaque 10 présente une évolution logarithmique.

Les angles de flèche externes $\Phi_0$ et $\Phi_E$ doivent répondre aux conditions suivantes:

$$0° < \Phi_0 \leq 30° \tag{7}$$
et
$$60° < \Phi_E \leq 90° \tag{8},$$
avec de préférence,
$$0° < \Phi_0 \leq 15° \tag{9}$$
et
$$70° \leq \Phi_E \leq 85° \tag{10}.$$

Le segment de droite 11 de la figure 3 montre un exemple d'évolution pour lequel $\Phi_0 = 0$, tandis que le sigment de droite 12 de cette figure 3 illustre un exemple d'évolution pour lequel $\Phi_0 \neq 0$.

En variante, la ligne de bord d'attaque 10 correspondant au diagramme 13 de la figure 4 est telle que l'angle de flèche $\Phi$ varie sensiblement linéairement dans la partie centrale de ladite ligne de bord d'attaque correspondant à la partie 13' de la courbe 13, et de façon non linéaire aux extrémités de la ligne 10 (portions 13" et 13''' de la courbe 13), la dérivée étant d'abord monotone décroissante puis ensuite monotone croissante selon la position en envergure.

Par ailleurs, la ligne de bord de fuite de l'extrémité de pale 2 comporte, en plan, une portion linéaire 14, entre un point B' et le point H. Le point B' se trouve sur la ligne de bord de fuite 8 (ou un prolongement de celle-ci) et est décalé vers l'extérieur, par rapport au point B, d'une distance s.

La distance s doit satisfaire à la relation suivante:

$$0,05\,C \leq s \leq 0,25\,C \tag{11}.$$

Dans un premier exemple de réalisation avantageux de l'invention, correspondant à la figure 3, les différents paramètres présentaient les valeurs suivantes:

$$E = 0,7\,C$$
$$m = 1,3\,C$$
$$s = 0,18\,C$$
$$I = 0,79\,C$$
$$\Phi_0 = 0°$$
$$\Phi_E = 77,5°$$

De même, dans un second exemple de réalisation avantageux de l'invention, correspondant à la figure 4, les différents paramètres présentaient les valeurs suivantes:

$$E = 0,7\,C$$
$$m = 1,3\,C$$
$$s = 0,1\,C$$
$$I = 0,8\,C$$
$$\Phi_0 = 0°$$
$$\Phi_E = 90°$$

On voit donc que les deux familles d'extrémité 2 (celle correspondant à la figure 3 et celle correspondant à la figure 4) sont telles que la ligne de bord de fuite 14 est mise en flèche vers l'arrière de telle sorte que le bord de fuite H du profil de la dernière section 9 soit nettement en arrière par rapport à celui 8 de la première section 3 de l'extrémité 2. Ce recul du bord de fuite est caractérisé par la valeur m qui devra être comprise entre 1,1 C et 1,5 C.

Le point de départ B' de la mise en flèche de la ligne de bord de fuite 14 est situé à une distance E−s de la corde du dernier profil 9 de l'extrémité 2.

Ce recul de la ligne de bord de fuite permet d'éviter l'apparition de chocs sur le bord extérieur de l'extrémité 2, chocs qui existeraient si la ligne de bord de fuite 14 était dans le prolongement de celle (8) de la partie courante de la pale 1.

Les lignes de bord d'attaque 10 et le bord de fuite 8, 14 des deux familles d'extrémité 2 selon l'invention sont telles que les cordes des profils de ces extrémités varient d'abord lentement (du fait de la faible valeur de l'angle $\Phi_0$ d'une part et de la présence du décalage B-B d'autre part), puis de plus en plus rapidement en fonction de la position e en envergure de la section considérée.

Cette réduction finale brutale des cordes de l'extrémité de pale 2, combinée à un vrillage adéquat de ladite extrémité, permet d'obtenir un effet bénéfique en vol d'avancement et en vol stationnaire, car on peut ainsi modifier la trajectoire du tourbillon marginal de façon à minimiser les interactions tourbillonnaires.

Un tel vrillage avantageux de l'extrémité de pale 2 peut consister à précaler la corde 15 de chaque profil successif de cette extrémité par rotation autour d'un point 16 situé sur la corde considérée à une distance v égale à 25%±5% de la longueur de corde 15, en arrière de la ligne 10 de bord d'attaque. Le lieu 17 des points 16 autour desquels sont effectuées ces rotations est situé dans un plan défini par la corde de pied de pale 18 (voir la figure 1), où le vrillage est nul, et l'axe de vrillage 19 de la partie courante de la pale 1. Ce vrillage de l'extrémité de pale 2 est de préférence linéaire (c'est-à-dire que la variation de l'angle de vrillage est linéaire en fonction de e) et négative (c'est-à-dire que le point G du profil 9 est plus bas que le point A du profil 3). Cependant, la loi de vrillage et le sens de vrillage peuvent être différents, en fonction des applications désirées; par exemple, le point G peut être plus haut que le point A.

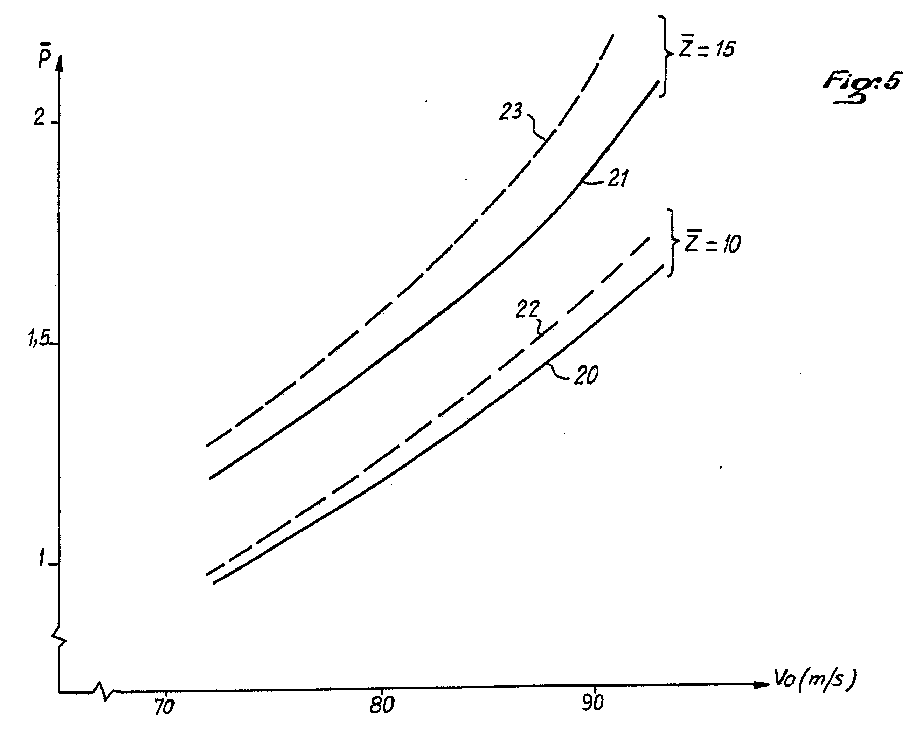

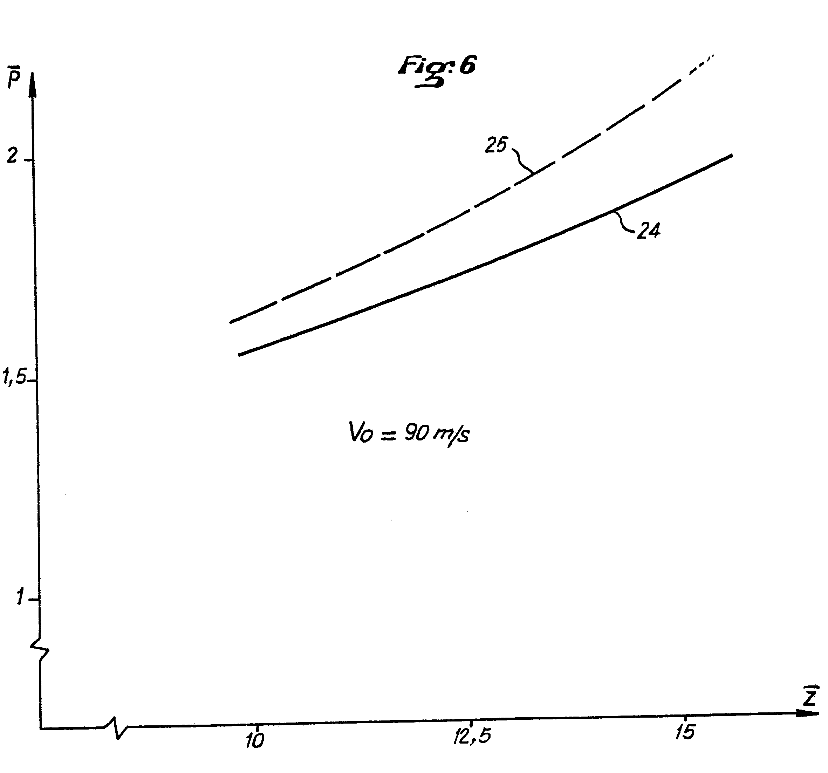

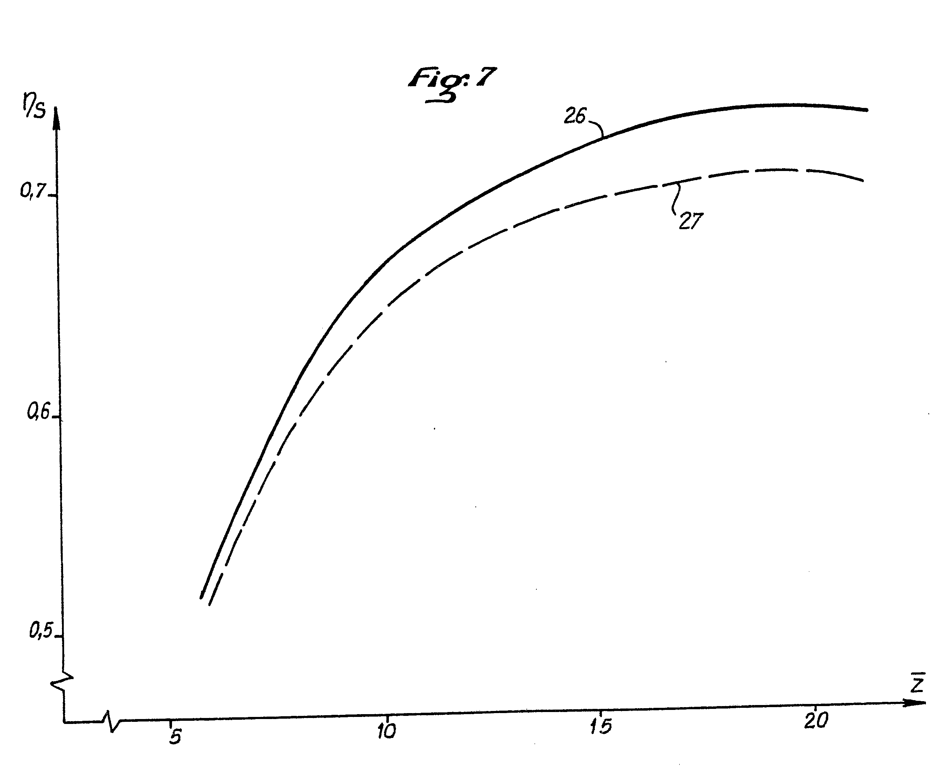

Afin de montrer l'influence de la seule forme en plan de l'extrémité de pale 2 selon l'invention sur les performances globales d'un rotor, les Demandeurs ont effectué des essais comparatifs en soufflerie entre deux rotors tripales identiques en ce qui concerne le rayon R du rotor (R=0,857 m), la corde C (C=0,123 m), le vrillage linéaire à −12° et les profils. La seule différence entre ces deux rotors est que l'un était équipé d'une extrémité 2 selon l'invention, alors que pour l'autre l'extrémité des pales était rectangulaire. Les figures 5, 6 et 7 illustrent les résultats de ces essais comparatifs, tant en ce qui concerne le vol d'avancement (figures 5 et 6) que le vol stationnaire (figure 7).

Ces essais font intervenir, d'une part, un coefficient de puissance $\bar{P}$ définit comme étant le rapport

$$\bar{P} = \frac{100\,P}{1/2\,\rho\,(\omega R)^3\,S\,\sigma}$$

et d'autre part, un coefficient de portance $\bar{Z}$ défini comme étant le rapport

$$\bar{Z} = \frac{100\,F_Z}{1/2\,\rho\,(\omega R)^2\,S\,\sigma}$$

avec

$P$ = puissance fournie au rotor
$\rho$ = masse volumique de l'air
$\omega R$ = vitesse périphérique du rotor
$S$ = surface du rotor en rotation
$\sigma = \dfrac{3\,C}{\pi R}$ plénitude du rotor
et
$F_Z$ = portance du rotor.

La figure 5, qui donne l'évolution du coefficient $\bar{P}$ significatif de la puissance à fournir aux rotors en fonction de la vitesse de vent Vo dans la soufflerie pour deux niveaux de portance $\bar{Z}$ (10 et 15), montre que le rotor pourvu de pales selon l'invention (courbes 20 et 21) est meilleur que le rotor à pale à extrémités rectangulaires (courbes 22, 23), puisque pour une vitesse Vo déterminée, le rotor à pales selon l'invention nécessite moins de puissance. Le gain de puissance peut atteindre de 5 à 8%.

Sur la figure 6, on a représenté l'évolution du

coefficient de puissance $\bar{P}$ en fonction de la portance qui lui est demandée à Vo = 90 m/s. A tous les niveaux utiles de portance des rotors, celui équipé de pales selon l'invention (courbe 24) est plus performant que celui à extrémités de pales rectangulaires (courbe 25). Enfin, la figure 7, qui donne l'efficacité sustentatrice $\eta_s$ en fonction de la portance $\bar{Z}$, montre qu'en vol stationnaire l'extrémité de pale selon l'invention (courbe 26) assure au rotor une efficacité sustentatrice (rapport de la puissance théorique de Froude à la puissance réelle fournie au rotor) supérieure à celle des pales à extrémité rectangulaire (courbe 27), quelle que soit la portance demandée au rotor.

## Revendications

1. Extrémité de pale (2) pour voilure tournante d'aéronef, dont l'envergure E est comprise entre 5 et 15% de l'envergure de ladite pale (1) et telle que, en plan, son bord d'attaque (10) et son bord de fuite (14) prolongent en flèche vers l'arrière, respectivement le bord d'attaque (7) et le bord de fuite (8) de la pale (1), alors que la corde la plus grande de ladite extrémité de pale (2) est au plus égale à la corde C du profil de la pale (1) adjacent à ladite extrémité de pale et que le point extrême G du bord d'attaque (10) de ladite extrémité de pale (2) se trouve vers l'arrière au-delà de la ligne d'envergure L-L de la pale (1) disposée en position médiane entre le bord d'attaque (7) et le bord de fuite (8) de la pale (1), ladite extrémité de pale (2) s'effilant vers l'extérieur, caractérisée en ce que le point commun A à la ligne de bord d'attaque (7) de la pale (1) et à la ligne de bord d'attaque (10) de l'extrémité de pale (2) est moins éloigné de l'axe X-X de la voilure tournante que le point commun B' à la ligne de bord de fuite (8) de la pale (1) et à la ligne de bord de fuite (14) de l'extrémité de pale, de sorte qu'entre lesdits points A et B' il existe un décalage s qui, mesuré parallelement à l'envergure de la pale, est compris entre 5 et 25% de la corde C du profil (3) de la pale (1) adjacent à ladite extrémité de pale et en ce que la ligne de bord d'attaque (10) de ladite extrémité de pale (2) est curviligne et telle que son angle de flèche $\Phi$ varie progressivement et de façon continue depuis une faible valeur $\Phi_0$ du côte de la pale (1), comprise entre 0 et 30°, jusqu'à une valeur élevée $\Phi_E$ vers l'extérieur de la pale (1), comprise entre 60 et 90°.

2. Extrémité de pale selon la revendication 1, caractérisée en ce que sa ligne de bord d'attaque (10) est telle que la variation (11,12) de l'angle de flèche $\Phi$ le long de l'envergure E est au moins approximativement linéaire sur au moins la plus grande partie de ladite envergure.

3. Extrémité de pale selon la revendication 2, caractérisée en ce que sa ligne de bord d'attaque (10) est telle que la variation (13') de l'angle de flèche $\Phi$ le long de l'envergure E est au moins approximativement linéaire dans la partie centrale de ladite extrémité, alors qu'à ses deux extrémités la variation (13", 13"') de l'angle de flèche est d'abord à dérivée monotone décroissante puis ensuite à dérivée monotone croissante, selon la position en envergure.

4. Extrémité de pale selon l'une des revendications 1 à 3, caractérisée en ce que la partie en flèche (14) de la ligne de bord de fuite est rectiligne.

5. Extrémité de pale selon l'une des revendications 1 à 4, caractérisée en ce qu'elle comporte deux profils d'extrémité (3 et 9) parallèle entre eux et orthogonaux à l'envergure de la pale, le profil d'extrémité intérieur (3) servant de raccord à la pale (1) et ayant une corde C plus grande que le profil d'extrémité extérieur (9), qui se trouve décalé vers l'arrière par rapport audit profil d'extrémité intérieur (3), les extrémités avant A et G des cordes desdits profils (3 et 9) étant reliées par une ligne de bord d'attaque (10), telle que son angle de flèche $\Phi$ varie progressivement et de façon continue depuis une faible valeur $\Phi_0$ du côté de la pale (1) jusqu'à une valeur élevée $\Phi_E$ vers l'extérieur de la pale, tandis que les extrémités arrière B et H des cordes desdits profils (3) et (9) sont reliées par une partie rectiligne BB' de bord de fuite prolongeant la ligne de bord de fuite (8) de la pale (1), suivie par une partie rectiligne (14) de bord de fuite en flèche.

6. Extrémité de pale selon la revendication 5, caractérisée en ce que son envergure E, la corde c du profil d'extrémité (9), la distance m du point arrière H du profil d'extrémité (9) à la ligne de bord d'attaque (7) de la pale (1), la distance I du point avant G du profil d'extrémité (9) à la ligne de bord d'attaque (7) de la pale (1), et la distance (d) du point arrière H à la ligne de bord de fuite (8) de la pale (1) sont liées par les relations suivantes:

$$0{,}3\,C \leq c \leq 0{,}7\,C \qquad (1)$$
$$0{,}5\,C \leq E \leq 1{,}5\,C \qquad (2)$$
avec de préférence,
$$0{,}7\,C \leq E \leq 1{,}1\,C \qquad (3)$$
$$0{,}5\,C \leq I \leq C \qquad (4)$$
$$1{,}1\,C \leq m \leq 1{,}5\,C \qquad (5)$$
et
$$0{,}1\,C \leq d \leq 0{,}5\,C \qquad (6)$$

7. Extrémité de pale selon l'une quelconque des revendications 1 à 6, caractérisée en ce que les valeurs $\Phi_0$ et $\Phi_E$ de l'angle de flèche $\Phi$ répondent aux relations

$$0° \leq \Phi_0 \leq 15° \qquad (9)$$
et
$$70° \leq \Phi_E \leq 85° \qquad (10)$$

8. Extrémité de pale selon l'une quelconque des revendications 1 à 7, caractérisée en ce que son vrillage consiste en un précalage de la corde de ses profils successifs, équivalent à une rotation effectuée autour d'un point (16) situé sur la corde du profil (15) considéré à 25% ± 5% en corde en arrière du bord d'attaque, le lieu (17) des points autour desquels sont effectuées les rotations étant situé dans un plan défini par la corde du pied de pale (18) où le vrillage est nul et par l'axe de vrillage (19) de la partie courante de la pale (1).

9. Extrémité de pale selon la revendication 8, caractérisée en ce que l'angle de vrillage varie linéairement le long de l'envergure E de l'extrémité de pale.

## Patentansprüche

1. Flügelblattende (2) für Flugzeugrotoren, deren Flügelspannweite E zwischen 5 und 15% der Flügelspannweite des Flügelblattes (1) liegt und derart ausgebildet ist, daß im Grundriß seine Vorderkante (10) und seine Hinterkante (14) pfeilartig nach hinten die Vorderkante (7) bzw. die Hinterkante (8) des Flügelblattes verlängern, während die größte Sehne des Flügelblattendes (2) höchstens gleich ist der Sehne C des Profils von Flügelblatt (1) neben dem Flügelblattende, und daß der äußerste Punkt G der Vorderkante (10) des Flügelblattendes (2) hinten über die Flügelspannweitenlinie L-L des Flügelblattes (1) hinaus liegt, das in mittlerer Stellung zwischen der Vorderkante (7) und der Hinterkante (8) des Flügelblattes (1) angeordnet ist, wobei sich das Ende des Flügelblattes (2) nach außen hin verschmälert, dadurch gekennzeichnet, daß der gemeinsame Punkt A auf der Vorderkantenlinie (7) des Flügelblattes (1) und auf der Vorderkantenlinie (10) des Flügelblattendes (2) in einer geringeren Entfernung zur Achse X-X des Rotors liegen wie der gemeinsame Punkt B' auf der Hinterkantenlinie (8) des Flügelblattes (1) und auf der Hinterkantenlinie (14) des Flügelblattendes, derart, daß zwischen den Punkten A und B' eine Schrägstellung s besteht, die, parallel zur Flügelspannweite gemessen, zwischen 5 und 25% der Sehne C von Profil (3) des Flügelblattes (1) neben dem Flügelblattende beträgt, und daß die Vorderkantenlinie (10) des Flügelblattendes (2) gekrümmt ist, derart, daß sein Pfeilstellungswinkel $\Phi$ sich fortschreitend und kontinuierlich ausgehend von einem kleinen Wert $\Phi_0$ auf der Flügelblattseite (1) zwischen 0 und 30° bis auf einen höheren Wert $\Phi_E$ zum Flügelblattende (1) zwischen 60 und 90° verändert.

2. Flügelblattende nach Anspruch 1, dadurch gekennzeichnet, daß die Vorderkantenlinie (10) so ausgebildet ist, daß die Schwankung (11, 12) des Pfeilstellungswinkels $\Phi$ längs der Flügelspannweite E auf zumindest dem größten Teil der Flügelspannweite wenigstens annähernd linear ist.

3. Flügelblattende nach Anspruch 2, dadurch gekennzeichnet, daß die Vorderkantenlinie so ausgebildet ist, daß die Schwankung (13') des Pfeilstellungswinkels $\Phi$ längs der Spannweite E in dem Mittelteil des Endes wenigstens annähernd linear ist, während die Schwankung (13", 13''') des Pfeilstellungswinkels je nach der Flügelspannweitenstellung an beiden Enden zunächst eine abnehmende monotone Ableitung und dann eine zunehmende monotone Ableitung ist.

4. Flügelblattende nach einem der Ansprüche 1 bis 3, dadurch gekennzeichnet, daß der Pfeilteil (14) der Hinterkantenlinie rechtwinklig ist.

5. Flügelblattende nach einem der Ansprüche 1 bis 4, dadurch gekennzeichnet, daß es zwei Endprofile (3 und 9) aufweist, die miteinander parallel und senkrecht zur Spannweite des Flügels verlaufen, wobei das innere Endprofil (3) zum Anschluß an das Flügelblatt (1) dient und eine Sehne C hat, die größer ist als das äußere Endprofil (9), das in bezug auf das innere Endprofil (3) nach hinten versetzt ist, die vorderen Enden A und G der Sehnen der Profile (3 und 9) durch eine Vorderkantenlinie (10) verbunden sind, so daß sein Pfeilstellungswinkel — ausgehend von einem geringen Wert $\Phi$ auf der Seite des Flügelblattes (1) bis zu einem höheren Wert $\Phi_E$ sich nach außen vom Flügelblatt fortschreitend und kontinuierlich verändert, während die Enden hinten B und H der Sehnen der Profile (3) und (9) durch einen rechtwinkligen Hinterkantenteil BB' verbunden sind, durch den die Hinterkantenlinie (8) des Flügelblattes (1) verlängert wird, worauf dann ein rechtwinkliger Pfeilhinterkantenteil (14) folgt.

6. Flügelblattende nach Anspruch 5, dadurch gekennzeichnet, daß seine Spannweite E, die Sehne c des Endprofils (9), der Abstand m des hinteren Punktes H des Endprofils (9) auf der Vorderkantenlinie (7) von Flügelblatt (1), der Abstand (1) des vorderen Punktes G vom Endprofil (9) auf der Vorderkantenlinie (7) des Flügelblattes (1) und der Abstand d des hinteren Punktes H auf der Hinterkantenlinie (8) des Flügelblattes (1) miteinander in folgenden Beziehungen stehen:

$$0,3\,C \leq c \leq 0,7\,C \tag{1}$$
$$0,5\,C \leq E \leq 1,5\,C \tag{2}$$
mit vorzugsweise
$$0,7\,C \leq E \leq 1,1\,C \tag{3}$$
$$0,5\,C \leq l \leq C \tag{4}$$
$$1,1\,C \leq m \leq 1,5\,C \tag{5}$$
und
$$0,1\,C \leq d \leq 0,5\,C \tag{6}$$

7. Flügelblattende nach einem der vorhergehenden Ansprüche 1 bis 6, dadurch gekennzeichnet, daß die Werte $\Phi_0$ und $\Phi_E$ von Pfeilwinkel $\Phi$ den Beziehungen

$$0° \leq \Phi_0 \leq 15° \tag{9}$$
und
$$70° \leq \Phi_E \leq 85° \tag{10}$$

entsprechen.

8. Flügelblattende nach einem der Ansprüche 1 bis 7, dadurch gekennzeichnet, daß seine Verwindung in einer Vorschiebung der Sehne der aufeinanderfolgenden Profile besteht und einer Drehung um einen Punkt (16) gleichwertig ist, der auf der Sehne des Profils (15) etwa bei 25%±5% an der Sehne hinter der Vorderkante liegt, wobei der Ort (17) der Punkte, um die die Drehungen durchgeführt werden, die in einer durch die Sehne des Flügelblattfußes (18), wo die Verwindung Null ist, und durch die Verwindungsachse (19) des laufenden Teils des Flügelblattes (1) festgelegten Ebene liegen.

9. Flügelblattende nach Anspruch 8, dadurch gekennzeichnet, daß der Verwindungswinkel linear längs der Flügelspannweite E des Flügelblattendes variiert.

**Claims**

1. Blade end (2) for the rotary wing of an aircraft, of which the span E is between 5 and 15% of the span of said blade (1) and such that, in plan, its leading edge (10) and its trailing edge (14) extend in sweepback the leading edge (7) and the trailing edge (8) is respectively of the blade (1), whilst the largest chord of said blade end (2) is at the most equal to the chord C of the profile of the blade (1) adjacent said blade end and the end point G of the leading edge (10) of said blade end (2) is located towards the rear beyond the line of span L-L of the blade (1) disposed in median position between the leading edge (7) and the trailing edge (8) of said blade (1), said blade end (2) tapering towards the outside, characterized in that the point common A to the leading edge line (7) of the blade (1) and to the leading edge line (10), of the blade end (2) is less remote from the axis X-X of the rotary wing than the point B' common to the trailing edge line (8) of the blade (1) and to the trailing edge line (14) of the blade end, so that, between said points A and B', there exists a stagger s which, measured parallel to the span of the blade, is between 5 and 25% of the chord C of the profil (3) of the blade (1) adjacent said blade end, and in that the leading edge line (10) of said blade end (2) is curvilinear and such that its sweep angle $\Phi$ varies progressively and continuously from a small value $\Phi_0$ near the blade of between 0 and 30°, up to a high value $\Phi_E$ towards the outside of the blade of between 60 and 90°.

2. The blade end of Claim 1, characterized in that its leading edge line (10) is such that the variation (11, 12) of the angle of sweep along the span E is at least approximately linear over at least the major part of said span.

3. The blade end of Claim 2, characterized in that its leading edge line (10) is such that the variation (13') of the angle of sweep $\Phi$ along the span E is at least approximately linear in the central part of said end, whilst, at its two ends, the variation (13", 13''') of the angle of sweep is firstly with monotonic descending derivative, then with monotonic ascending derivative, depending on the position in span.

4. The blade end of one of Claims 1 to 3, characterized in that the sweepback part (14) of the trailing edge line is rectilinear.

5. The blade end of one of Claims 1 to 4, characterized in that it comprises two parallel end profiles (3 and 9) orthogonal to the span of the blade, the inner end profile (3) serving as connection to the blade (1) and having a larger chord C than the outer end profile (9), which is staggered rearwardly with respect to said inner end profile (3), the front ends A and G of the chords of said profiles (3 and 9) being joined by a leading edge line (10), such that its angle of sweep $\Phi$ varies progressively and continuously from a low value $\Phi_0$ near the blade (1) up to a high value $\Phi_E$ towards the outside of the blade, whilst the rear ends B and H of the chords of said profiles (3 and 9) are joined by a rectilinear trailing edge part BB' extending the trailing edge line (8) of the blade (1), followed by a rectilinear trailing edge part (14) in sweepback.

6. The blade end of Claim 5, characterized in that its span E, the chord c of the end profile (9), the distance m of the rear point H of the outer end profile (9) to the leading edge line (7) of the blade (1), the distance I of the front point G of the end profile (9) to the leading edge line (7) of the blade (1), and the distance d of the rear point H to the trailing edge line (8) of the blade (1) are connected by the following relations:

$$0.3\,C \leq C \leq 0.7\,C \qquad (1)$$
$$0.5\,C \leq E \leq 1.5\,C \qquad (2)$$
with, preferably,
$$0.7\,C \leq E \leq 1.1\,C \qquad (3)$$
$$0.5\,C \leq I \leq C \qquad (4)$$
$$1.1\,C \leq m \leq 1.5\,C \qquad (5)$$
and
$$0.1\,C \leq d \leq 0.5\,C \qquad (6)$$

7. The blade end of one of Claims 1 to 6, characterized in that the values $\Phi_0$ and $\Phi_E$ of the angle of sweep $\Phi$ respond to the relations:

$$0° \leq \Phi_0 \leq 15° \qquad (9)$$
and
$$70° \leq \Phi_E \leq 85° \qquad (10)$$

8. The blade end of one of Claims 1 to 7, characterized in that its twist consists in a pre-adjustment of the chord of its successive profiles, equivalent to a rotation effected about a point (16) located on the chord of the profile (15) considered at a distance equal to 25%±5% of the length of the chord, to the rear of the leading edge, the locus (17) of the points about which the rotations are effected being located in a plane defined by the chord of the blade shank (18) where twist is zero, and the axis of the twist (19) of the current part of the blade (1).

9. The blade end of Claim 8, characterized in that the angle of twist varies linearly along the span E of the blade end.

0 067 097

Fig.1

0 067 097

Fig: 2

Fig: 3

Fig: 4

Fig: 5

Fig. 6

$V_0 = 90\ m/s$

Fig. 7